Europäisches Patentamt

European Patent Office

Office européen des brevets

(11) Numéro de publication: **0 228 939
B1**

(12) # FASCICULE DE BREVET EUROPEEN

(45) Date de publication du fascicule du brevet:
26.09.90

(51) Int. Cl.⁵: **B24C 1/00, B24C 3/00**

(21) Numéro de dépôt: **86402668.7**

(22) Date de dépôt: **02.12.86**

(54) **Procédé et appareil de traitement mécanique de pièces.**

(30) Priorité: **12.12.85 FR 8518393**

(43) Date de publication de la demande:
**15.07.87 Bulletin 87/29**

(45) Mention de la délivrance du brevet:
**26.09.90 Bulletin 90/39**

(84) Etats contractants désignés:
**AT BE CH DE ES FR GB GR IT LI LU NL SE**

(56) Documents cités:
**EP-A- 0 041 797
EP-A- 0 140 856
FR-A- 1 433 027
FR-A- 2 174 331
FR-A- 2 534 513
US-A- 4 524 548**

(73) Titulaire: **L'AIR LIQUIDE, SOCIETE ANONYME POUR
L'ETUDE ET L'EXPLOITATION DES PROCEDES
GEORGES CLAUDE, 75, Quai d'Orsay, F-75321 Paris
Cédex 07(FR)**

(72) Inventeur: **Lecourt, Jean-Pierre, 25, rue des Vignes
Blanches, F-95000 Jouy-le-Moutier(FR)**
Inventeur: **Roullet, Alain, 10, allée des Feuillantines,
F-94800 Villejuif(FR)**

(74) Mandataire: **Jacobson, Claude et al, Cabinet
Lavoix 2, Place d'Estienne d'Orves, F-75441 Paris
Cedex 09(FR)**

## Description

La présente invention est relative à un procédé de traitement mécanique de pièces, dit de cryogrenaillage, du type dans lequel on amène au moins certaines parties des pièces à traiter, et/ou un revêtement de celles-ci, à une température basse de fragilisation, et on projette un matériau en particules sur les pièces refroidies. Elle s'applique notamment au décapage mécanique de pièces et à l'ébavurage de pièces moulées, mais également à d'autres traitements mécaniques tels que l'élimination de certaines parties de la surface d'objets.

Dans un procédé du type ci-dessus (FR-A 2 174 331), les pièces à traiter sont tout d'abord refroidies, au moins partiellement, de façon à fragiliser leurs parties que l'on veut éliminer par grenaillage (revêtement ou barbes notamment), ce qui facilite considérablement le grenaillage.

On connaît par ailleurs des procédés de traitement de pièces dans lesquels on projette un matériau en particules par soufflage, au moyen d'un jet de gaz de transport, sur des pièces à traiter. Ces procédés sont particulièrement avantageux pour le traitement de pièces de dimensions relativement faibles.

Cependant, il n'a pas été possible jusqu'à présent de concilier les deux techniques, car le gaz de transport de la seconde technique, dont le débit est toujours important, a pour effet de ramener très rapidement la température superficielle des pièces au-dessus de la température de fragilisation.

L'invention a pour but de permettre de combiner les avantages des deux techniques en question. A cet effet, elle a pour objet un procédé de grenaillage du type précité, caractérisé en ce qu'on projette le matériau sur les pièces par simple soufflage au moyen d'un jet d'un gaz de transport préalablement refroidi.

Dans un mode de mise en œuvre de ce procédé, on utilise comme gaz de transport un gaz extrait d'un tunnel de refroidissement des pièces à traiter. En variante, notamment dans le cas d'un ébavurage d'objets en caoutchouc, on peut envoyer tout d'abord le gaz de transport refroidi sur les pièces, pour refroidir ces dernières, puis introduire le matériau en particules dans le courant de gaz de transport refroidi.

L'invention a également pour objet un appareil de traitement mécanique de pièces destiné à la mise en œuvre d'un tel procédé. Cet appareil, du type comprenant des moyens de refroidissement d'au moins certaines parties des pièces à traiter, et/ou d'un revêtement de celles-ci, à une température basse de fragilisation, et des moyens pour projeter un matériau en particules sur les pièces à traiter refroidies, est caractérisé en ce que les moyens de projection sont constitués par une conduite de circulation d'un gaz de transport aboutissant à une buse de projection par soufflage, des moyens pour introduire un matériau en particules dans cette conduite, et des moyens d'alimentation de la conduite en gaz de transport refroidi.

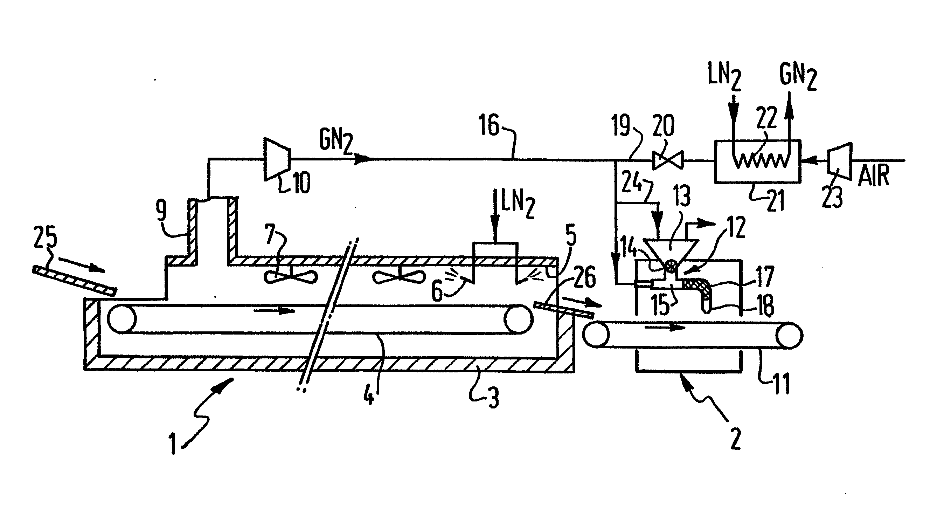

Un exemple de mise en œuvre de l'invention va maintenant être décrit en regard du dessin annexé, sur lequel la figure unique représente schématiquement un appareil conforme à l'invention.

L'appareil représenté au dessin comprend essentiellement un tunnel de refroidissement 1 suivi d'une cabine de grenaillage 2. Il est destiné à l'ébavurage de pièces composites en matière plastique ou en caoutchouc pourvues d'inserts métalliques.

Le tunnel 1 est un tunnel du commerce d'un type utilisé pour la surgélation alimentaire. Il comprend une enveloppe 3 thermiquement isolée contenant un convoyeur sans fin 4 qui s'étend sur toute sa longueur. Ce convoyeur peut être par exemple en tissu métallique ou constitué de plaques articulées entre elles. Le tunnel comprend également :
- près de son ouverture de sortie 5, des buses 6 de pulvérisation d'azote liquide (ou, en variante, d'un autre liquide de refroidissement, par exemple d'anhydride carbonique liquide) orientées en oblique vers la paroi supérieure du tunnel ;
- dans sa partie intermédiaire, des ventilateurs 7 disposés au-dessus du convoyeur ; et
- près de son ouverture d'entrée 8, une cheminée 9 d'extraction de gaz froid reliée à l'aspiration d'un compresseur 10.

Pour limiter les sorties de gaz froid par l'ouverture 5, celle-ci peut être pourvue d'un rideau souple (non représenté) en lamelles de matière plastique restant flexible à froid.

La cabine de grenaillage 2 est traversée par un second convoyeur sans fin 11 et comporte au moins une grenailleuse 12 à jet gazeux. Cette dernière comprend une trémie 13 de stockage d'un matériau en particules ou grenaille, pourvue à sa sortie d'un dispositif doseur 14 débitant dans la hampe d'un raccord 15 en forme de T inversé. Les deux branches horizontales de ce T sont reliées l'une, via une conduite 16, au refoulement du compresseur 10, l'autre à un tuyau souple 17 qui se termine par une buse de projection 18.

A la conduite 16 se raccorde par ailleurs une conduite 19 d'amenée d'air refroidi d'appoint. Cette conduite, munie d'une vanne 20, traverse un échangeur de chaleur 21 parcouru par un serpentin de vaporisation d'azote 22 et est alimentée par un compresseur d'air 23. Une partie du gaz froid arrivant à la grenailleuse 12 est dérivée par une conduite 24 et envoyée dans la trémie 13 pour y prérefroidir la grenaille.

En fonctionnement, les pièces à ébavurer (non représentées) sont déversées sur le convoyeur 1 par un plan incliné 25. Dans le tunnel 1, elles sont progressivement refroidies par l'azote vaporisé circulant à contre-courant. Les paramètres du refroidissement sont choisis de façon d'une part à garantir que les parties de ces pièces à éliminer par grenaillage, ici leurs barbes de moulage, sont amenées à une température inférieure à leur température de fragilisation, et d'autre part à éviter tout choc thermique risquant de provoquer des tensions excessives dans les pièces composites, notamment aux interfaces matière plastique ou caoutchouc/métal, et par suite des fissurations et des décollements.

Cette dernière condition explique pourquoi, dans l'exemple représenté, les buses 6 sont agencées de façon que les gouttelettes d'azote liquide n'atteignent pas les pièces à traiter, lesquelles sont refroidies uniquement par la convection d'azote gazeux froid à contre-courant.

Les pièces ainsi refroidies sont déversées par un second plan incliné 26 du convoyeur 4 sur le convoyeur 11 et pénètrent dans la cabine de grenaillage 2. Elles y sont soumises à l'action abrasive de la grenaille projetée par la ou les buses 18, lesquelles peuvent être fixes ou manipulées par des bras automatiques ou manuellement.

Le débit du gaz de transport de la grenaille et le débit de la grenaille sont choisis de façon à assurer l'intensité désirée de l'effet mécanique exercé sur les pièces. Le débit de gaz peut être réglé notamment par le débit d'air d'appoint amené par la conduite 19. La température du gaz de transport peut être réglé par le débit et la température de l'air d'appoint ; elle est choisie suffisamment basse pour assurer que les parties de pièces à éliminer restent à une température inférieure à leur température de fragilisation pendant le grenaillage.

Si la grenaille est métallique, elle est elle-même refroidie par le gaz froid de transport. Dans les autres cas (par exemple grenaille en matière plastique), et même lorsque la grenaille est métallique, il peut être souhaitable de refroidir la grenaille pendant son séjour dans la trémie 13 au moyen de la dérivation 24 du gaz froid, comme décrit plus haut.

L'appareil décrit ci-dessus est très avantageux car il utilise d'une part un tunnel de refroidissement classique, d'autre part une cabine de grenaillage classique, avec seulement quelques adaptations faciles à réaliser (orientation des buses 6, circuit gazeux 16, 19). De plus, il permet d'obtenir lors du grenaillage d'excellents résultats avec un coût réduit tant d'investissement que d'utilisation, les frigories de l'azote liquide étant particulièrement bien utilisées.

Cet appareil peut être modifié de différentes façons, suivant le traitement à réaliser et la nature des pièces à traiter :

- Si les pièces ne sont pas trop délicates, par exemple pour le décapage d'objets métalliques peints, les buses 6 peuvent être agencées de façon à projeter l'azote liquide directement sur les pièces.
- Le tunnel 1 peut être supprimé et le gaz froid de transport de la grenaille être utilisé pour assurer le refroidissement des pièces, notamment si celles-ci sont faciles à fragiliser (par exemple, pour l'ébarbage d'objets en caoutchouc, que se fragilisent vers -20°C). Dans ce cas, on peut commencer par envoyer uniquement le gaz froid sur les pièces puis, grand celles-ci sont suffisamment refroidies, déverser la grenaille dans le courant de gaz froid. Il est alors nécessaire, bien entendu, que la température du gaz froid soit elle-même inférieure à la température de fragilisation des pièces. Le gaz froid peut notamment être de l'air comprimé refroidi par échange de chaleur indirect avec de l'azote liquide ou par injection directe d'azote liquide dans la conduite qui le véhicule.
- La grenailleuse 12 peut être remplacée par une ou plusieurs roues de projection de grenaille travaillant à température ambiante, notamment pour le traitement d'objets de grandes dimensions. De façon surprenante, on a constaté que l'on obtenait ainsi à moindre coût des résultats au moins aussi bons qu'avec les appareils existants comprenant un tunnel spécial incorporant une grenailleuse qui travaille à froid.

**Revendications**

1. - Procédé de traitement mécanique de pièces, du type dans lequel on projette un matériau en particules par soufflage, au moyen d'un jet de gaz de transport, sur des pièces à traiter, caractérisé en ce qu'on amène au moins certaines parties de pièces, et/ou un revêtement de celles-ci, à une température basse de fragilisation, et en ce qu'on utilise comme gaz de transport un gaz préalablement refroidi.

2. - Procédé suivant la revendication 1, caractérisé en ce qu'on utilise comme gaz de transport de l'air refroidi par échange de chaleur avec de l'azote liquide.

3. - Procédé suivant l'une des revendications 1 et 2, caractérisé en ce qu'on utilise comme gaz de transport un gaz extrait d'un tunnel (1) de refroidissement des pièces à traiter.

4. - Procédé suivant la revendication 3, caractérisé en ce qu'on pulvérise dans le tunnel (1) un liquide qui se vaporise pour former ledit gaz.

5. - Procédé suivant la revendication 4, caractérisé en ce qu'on pulvérise ledit liquide de façon à éviter tout contact entre les gouttelettes de ce liquide et les pièces à traiter.

6. - Procédé suivant l'une des revendications 1 et 2, caractérisé en ce que l'on envoie tout d'abord le gaz de transport refroidi sur les pièces, pour refroidir ces dernières, puis on introduit le matériau en particules dans le courant de gaz de transport refroidi.

7. - Procédé suivant l'une quelconque des revendications 1 à 6, caractérisé en ce qu'on refroidit le matériau en particules avant de l'introduire dans le courant de gaz de transport.

8. - Appareil de traitement mécanique de pièces, du type comprenant des moyens de refroidissement d'au moins certaines parties des pièces à traiter, et/ou d'un revêtement de celles-ci, à une température basse de fragilisation, et des moyens pour projeter un matériau en particules sur les pièces à traiter refroidies, caractérisé en ce que les moyens de projection sont constitués par une conduite (17) de circulation d'un gaz de transport aboutissant à une buse de projection par soufflage (18), des moyens (13, 14) pour introduire un matériau en particules dans cette conduite, et des moyens (16, 19) d'alimentation de la conduite en gaz de transport refroidi.

9. - Appareil suivant la revendication 8, caractérisé en ce qu'il comprend également des moyens (24) de refroidissement du matériau en particules.

10. - Appareil suivant l'une des revendications 8 et 9, caractérisé en ce qu'il comprend en outre un tunnel (1) de refroidissement des pièces comportant des moyens (6) de pulvérisation d'un liquide de refroidissement et des moyens (9) d'extraction de gaz reliés à ladite conduite (17).

11. - Appareil suivant la revendication 10, caractérisé en ce que les moyens de pulvérisation (6) sont orientés vers les parois du tunnel (1).

12. - Appareil suivant l'une des revendications 10 et 11, caractérisé en ce que les moyens de pulvérisation (6) sont prévus à l'extrémité aval du tunnel (1) et les moyens d'extraction (9) à son extrémité amont.

## Claims

1. A method for mechanical processing of workpieces, of the type in which at least certain parts of the workpieces to be processed, and/or a covering of these, are brought to a low embrittling temperature and a particulate material is projected against the cooled workpieces to be processed, characterised in that the material is projected at the workpieces by simple blowing means of a precooled carrier gas jet.

2. A method according to claim 1, characterised in that air cooled by heat exchange with liquefied nitrogen is used as a carrier gas.

3. A method according to one of the claims 1 and 2, characterised in that a gas drawn from a tunnel (1) for cooling the workpieces to be processed is used as a carrier gas.

4. A method according to claim 3, characterised in that a liquid which vaporises to form the said gas is sprayed into the tunnel (1).

5. A method according to claim 4, characterised in that the said liquid is sprayed in such a way as to prevent any contact between the droplets of this liquid and the workpieces to be processed.

6. A method according to one of claims 1 and 2, characterised in that first of all the cooled carrier gas is directed over the workpieces to cool these latter, after which the particulate material is introduced into the flow of cooled carrier gas.

7. A method according to any one of claims 1 to 6, characterised in that the particulate material is cooled before introducing it into the flow of carrier gas.

8. An apparatus for mechanical processing of workpieces, of the type comprising means for cooling at least certain parts of the workpieces to be processed, and/or a covering of these, to a low embrittling temperature, and means for projecting a particulate material to the cooled workpieces to be processed, characterised in that the projecting means are constituted by a conduit (17) for conveying a carrier gas, leading to a nozzle (18), for projection by blowing, means (13, 14) for introducing a particulate material into this conduit and means (16, 19) for supplying the pipe with cooled carrier gas.

9. An apparatus according to claim 8, characterised in that it also comprises means (24) for cooling the particulate material.

10. An apparatus according to one of claims 8 and 9, characterised in that it also comprises a tunnel (1) for cooling the workpieces, comprising means (6) for spraying a cooling liquid and gas extracting means (9) connected to the said conduit (17).

11. An apparatus according to claim 10, characterised in that the spraying means (6) are directed towards the walls of the tunnel (1).

12. An apparatus according to one of claims 10 and 11, characterised in that the spraying means (6) are provided at the downstream end of the tunnel (1) and the extraction means (9) at its upstream end.

## Patentansprüche

1. Verfahren zur mechanischen Behandlung von Teilen, bei welchem mindestens bestimmte Abschnitte der zu behandelnden Teile und/oder eine Beschichtung dieser Teile auf eine niedrige Versprödungstemperatur gebracht werden und ein teilchenförmiges Material auf die zu behandelnden, gekühlten Teile geschleudert wird, dadurch gekennzeichnet, daß das Material durch einfaches Blasen mit Hilfe eines Strahls eines zuvor gekühlten Fördergases auf die Teile geschleudert wird.

2. Verfahren nach Anspruch 1, dadurch gekennzeichnet, daß als Fördergas durch Wärmeaustausch mit flüssigem Stickstoff gekühlte Luft benutzt wird.

3. Verfahren nach Anspruch 1 oder 2, dadurch gekennzeichnet, daß als Fördergas ein Gas benutzt wird, das aus einem Kühltunnel (1) für die zu behandelnden Teile abgezogen wird.

4. Verfahren nach Anspruch 3, dadurch gekennzeichnet, daß in den Tunnel (1) eine Flüssigkeit zerstäubt wird, die verdampft und dadurch das genannte Gas bildet.

5. Verfahren nach Anspruch 4, dadurch gekennzeichnet, daß die genannte Flüssigkeit so zerstäubt wird, daß jede Berührung zwischen den Tröpfchen dieser Flüssigkeit und den zu behandelnden Teilen vermieden wird.

6. Verfahren nach Anspruch 1 oder 2, dadurch gekennzeichnet, daß zuerst das gekühlte Fördergas auf die Teile geleitet wird, um diese zu kühlen, und daß dann das teilchenförmige Material in den gekühlten Fördergasstrom eingeführt wird.

7. Verfahren nach einem der Ansprüche 1 bis 6, dadurch gekennzeichnet, daß das teilchenförmige Material gekühlt wird, bevor es in den Fördergasstrom eingeführt wird.

8. Einrichtung zur mechanischen Behandlung von Teilen, ausgestattet mit einer Einrichtung zum Kühlen von mindestens bestimmten Abschnitten der zu behandelnden Teile und/oder einer Beschichtung dieser Teile, auf eine niedrige Versprödungstemperatur, und mit einer Einrichtung zum Schleudern eines teilchenförmigen Materials auf die zu behandelnden gekühlten Teile, dadurch gekennzeichnet, daß die Schleudereinrichtung aus einer Durchflußleitung (17) für ein Fördergas besteht, die an ein einen Blasvorgang ausübendes Schleudermundstück (18) führt, ferner aus einer Einrichtung (13, 14) zum Einbringen eines teilchenförmigen Materials in diese Leitung, und aus einer Einrichtung (16, 19) zur Speisung der Leitung für gekühltes Fördergas.

9. Einrichtung nach Anspruch 8, dadurch gekennzeichnet, daß sie ferner eine Einrichtung (24) zum Kühlen des teilchenförmigen Materials aufweist.

10. Einrichtung nach Anspruch 8 oder 9, dadurch gekennzeichnet, daß sie außerdem einen Kühltunnel (1) für die Teile aufweist, welcher Mittel (6) zum Zer- stäuben einer Kühlflüssigkeit aufweist sowie mit der genannten Leitung (17) in Verbindung stehende Mittel (9) zum Abziehen von Gas.

11. Einrichtung nach Anspruch 10, dadurch gekennzeichnet, daß die Mittel (6) zum Zerstäuben gegen die Wände des Tunnels (1) gerichtet sind.

12. Einrichtung nach Anspruch 10 oder 11, dadurch gekennzeichnet, daß die Mittel (6) zum Zerstäuben am stromab gelegenen Ende des Tunnels (1) und die Mittel (9) zum Abziehen von Gas am stromauf gelegenen Ende des Tunnels (1) vorgesehen sind.

EP 0 228 939 B1